# EUROPEAN PATENT SPECIFICATION

(11) **EP 4 396 556 B1**
(45) Date of publication and mention of the grant of the patent: **10.06.2026**
(21) Application number: 22772696.5
(22) Date of filing: 24.08.2022
(51) Int. Cl.: G01N 3/42, G01N 3/04

(54) **SYSTEMS AND METHODS FOR MOUNTING A GRINDER/POLISHER SAMPLE HOLDER**
SYSTEME UND VERFAHREN ZUR MONTAGE EINES SCHLEIF-/POLIER-PROBENHALTERS
SYSTÈMES ET PROCÉDÉS DE MONTAGE D'UN PORTE-ÉCHANTILLON DE MEULEUSE/POLISSEUSE

(30) Priority: 31.08.2021 US 202163238861 P; 22.08.2022 US 202217892191
(43) Date of publication of application: 10.07.2024
(73) Proprietor: Illinois Tool Works Inc., Glenview, IL 60025 (US)
(72) Inventor: GEIS, David, Glenview, Illinois 60025 (US); BURNS, Alicia, Glenview, Illinois 60025 (US)
(74) Representative: HGF
(86) International application number: PCT/US2022/041294
(87) International publication number: WO 2023/034082

(56) References cited:
- CN-A- 112 730 005
- CN-B- 105 510 164

## Description

### CROSS-REFERENCE TO RELATED APPLICATIONS

This application hereby claims priority to and the benefit of U.S. Provisional Application Ser. No. 63/238,861, entitled "Systems And Methods For Mounting A Grinder/Polisher Sample Holder," filed August 31, 2021.

### BACKGROUND

Grinding and polishing operations are performed on specimens for numerous purposes and across a vast array of sectors and industries. In some applications, surface preparation of a specimen by grinding/polishing operations are performed in a grinding/polishing devices are capable of performing both grinding operations and polishing operations to work a specimen contained in a sample holder. If additional testing is to be performed on the specimen, it must be removed from the sample holder.

Document CN105510164B describes a portable all-in-one machine for microstructure observation and Vickers hardness testing. The machine has a structure with a base, on which a fixed knob, a power lead and a switch are installed. A lifting screw column, a screw column lifter and a central column are vertically installed upward at the center of the base and a screw handle is installed on the screw column lifter. A turntable, a lateral translation stage and a longitudinal translation disk are installed on the upper part of the lifting screw column, and a sample loading platform, a three-claw clamp, a four-claw clamp and a two-claw clamp are installed on the longitudinal translation disk. The portable all-in-one machine for microstructure observation and Vickers hardness testing has a compact structure providing a variety of special clamps for the samples.

Document CN112730005A discloses a hardness detection device and a detection method for a building steel member, wherein the hardness detection device is capable of clamping sample plates in various forms and simultaneously carry out multi-point detection. The device comprises a support, with the upper end of the support being connected with a cross beam and the lower end of the support being rotationally connected with a clamping mechanism. Here, the clamping mechanism is connected with a sample plate, the lower end of the clamping mechanism is connected with a supporting table, and the sample plate is attached to the upper end of the supporting table. The main benefit of this hardness detection device is that the sample plate is clamped and that polishing, indentation and measurement functions are integrated.

### SUMMARY

Systems and methods are disclosed of a system for mounting a grinder/polisher sample holder, substantially as illustrated by and described in connection with at least one of the figures, as set forth more completely in the claims.

### BRIEF DESCRIPTION OF THE DRAWINGS

FIG. 1 illustrates an example system for mounting a grinder/polisher sample holder, in accordance with aspects of this disclosure.
FIG. 2A illustrates a lateral view of the example system of FIG. 1.
FIG. 2B illustrates an exploded view of the example system of FIG. 1.
FIG. 3A illustrates a top view of the example system of FIG. 1.
FIG. 3B illustrates a cross-sectional view of an example mounting fixture of the example system of FIG. 1.
FIG. 4 is a perspective view of the example system of FIG. 1.
FIGS. 5A to 5C illustrate various views of the example system for mounting a grinder/polisher sample holder of FIG. 1 employed with a hardness testing machine, in accordance with aspects of this disclosure.

The figures are not necessarily to scale. Wherever appropriate, similar or identical reference numerals are used to refer to similar or identical components.

### DETAILED DESCRIPTION

Disclosed are systems and methods of a system for mounting a grinder/polisher sample holder. In particular, the system includes a platform having one or more fasteners, upon which one or more mounting fixtures are arranged and mounted. The one or more mounting fixtures are configured to secure the sample holder in place for testing of the samples, such as a hardness test. One or more of the mounting fixtures may include mounting brackets to support the sample holder, and to fix an orientation and/or position of the sample holder. In examples, the mounting fixtures have interfaces (e.g., hardened pins, contact tips, etc.) to contact and support the sample holder when the sample holder is arranged within the system.

As disclosed herein, the mounting system provides a sample holding fixture, which can be used with grinding/polishing systems, as well as hardness testing machines. For example, the sample holders are disc trays that hold multiple mounted samples or specimens (e.g., in a contained cartridge secured within the sample holder) in place for simultaneous grinding and/or polishing operations. Grinding/polishing systems involve grinding and/or polishing a specimen using one or more motors or other actuators. After polishing, the polished specimen may then be used to test a manufacturing or other process that resulted in the specimen, such as by performing visual inspection, hardness or density testing, and/or other desired testing.

Conventionally, an operator would have to remove individual specimens from the sample holder and load that specimen, individually, in another holding platform for hardness testing, for example. The result is additional time and resources devoted, not to testing, but to separating and arranging specimens.

The disclosed sample holding fixtures and systems enable the operator to move an entire sample holder tray and mount it directly onto the hardness tester without unloading individual specimens. This significantly reduces the amount of work required to test multiple specimens and reduces the chance for accidental scratches and/or other damage to the specimens.

In disclosed examples, a system for mounting a grinder/polisher sample holder includes a platform having one or more fasteners, and one or more mounting fixtures arranged on and mounted to the platform, the one or more mounting fixtures configured to secure a sample holder, each mounting fixture including one or more mounting brackets to fix an orientation or position of the sample holder, and one or more interfaces to contact and support the sample holder when the sample holder is arranged within the system.

In some examples, the one or more mounting fixtures comprises three or more fixtures distributed about the platform at an equal radial distance from a center point. In examples, each fixture of the one or more fixtures is separated by an equal distance between axial positions.

In some examples, the arrangement of the one or more mounting fixtures on the platform is adjustable based on a size or shape of the sample holder.

In some examples, a mounting bracket of the one or more mounting brackets is configured as an adjustable mounting bracket, the system further comprising a bracket lock to adjust a position or orientation adjustable mounting bracket to release and secure the sample holder to system.

In some examples, each mounting fixture further includes a base portion to mate with the platform, and a column extending from the base portion to support the interface. In examples, the one or more interfaces are mounted to an extension post extending from the column. In examples, the base portion is configured to be secured to the platform via the one or more fasteners.

In some examples, the one or more mounting brackets are secured to the one or more mounting fixtures via one or more bracket fasteners.

In some examples, the one or more interfaces are arranged to contact a first surface of the sample holder to limit movement of the sample holder in a first direction, and the brackets are configured to contact a second surface of the sample holder to limit movement of the sample holder in a second direction.

In some examples, the one or more mounting fixtures are formed of a metal such as stainless steel.

In some examples, the one or more interfaces are formed of a hardened material, such as carbide or steel.

In some examples, the one or more mounting fixtures support the sample holder at a distance from a surface of the platform that is greater than a length of a sample holder drive adapter.

In some examples, the system is configured to be incorporated in a hardness testing machine.

In some disclosed examples, a hardness testing system includes a grinder/polisher sample holder, and a system for mounting a grinder/polisher sample holder, including a platform comprising one or more fasteners, one or more mounting fixtures arranged on and mounted to the platform, the one or more mounting fixtures configured to secure a sample holder, each mounting fixture including one or more mounting brackets to fix an orientation or position of the sample holder, and one or more interfaces to contact and support the sample holder when the sample holder is arranged within the system.

In some examples, a platen configured for mounting the system for mounting a grinder/polisher sample holder is included.

In examples, the system for mounting a grinder/polisher sample holder further includes one or more alignment devices configured to mate with one or more alignment devices at the platen.

In some examples, an indenture device is included to test hardness of a sample within the sample holder by impacting the sample.

In some examples, a movable stage upon which the platen is secured is included, the movable stage configured to adjust a position or orientation of the sample relative to the indenture device.

In some examples, the platen further comprises one or more alignment devices to mate with the platform.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the term "embodiments" does not require that all disclosed embodiments include the discussed feature, advantage, or mode of operation.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations.

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

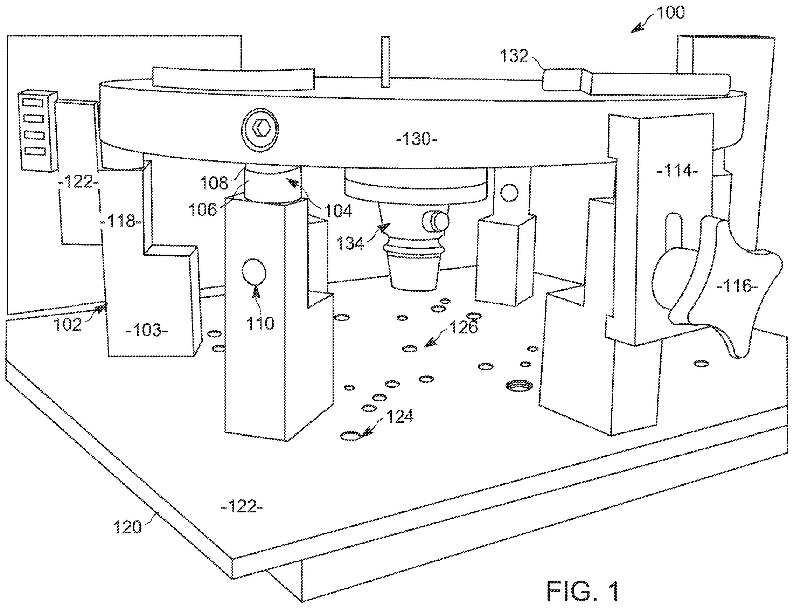

FIG. 1 illustrates an example fixture or system 100 for mounting a grinder/polisher sample holder 130. The system 100 includes one or more mounting fixtures 102 arranged on and mounted to a platform 120. As shown, the mounting fixtures 102 are configured to secure the sample holder 130, thereby fixing an orientation and/or position of the sample holder 130 in preparation of an operation, such as hardness testing.

Each mounting fixture can include one or more mounting brackets 112, which can be in a removably secured to a column 104 of the mounting fixture 102. For example, the mounting fixtures 102 can include one or more sample mounting bracket fasteners 110, such as a threaded hole to receive a bolt. In some examples, the mounting brackets 112 can be adjusted relative to the mounting fixture 102 and/or the sample, such as by raising, lowering, tilting, and/or sliding laterally, as a list of non-limiting examples. Example adjustable mounting locking bracket 114 is shown with a sample mounting locking bracket 116, although any variety of fasteners or bolts can be used. As shown in FIG. 1, the mounting brackets 112 are configured to contact a lateral surface of the sample holder to limit movement of the sample holder in a lateral direction. In some examples, one or more mounting brackets 112 may be configured to contact one or more of the top and/or bottom surfaces of the sample holder 130, and may be shaped to fit the contours of the sample holder 130 (e.g., curved).

In some examples, one or more interfaces 108 are formed on and/or secured to the column 118 to contact and support the sample holder 130 when the sample holder is arranged within the system 100, thereby limiting movement of the sample holder 130 in a downward direction. In some examples, the one or more interfaces 108 are formed integrally with the column 118. In some examples, the one or more interfaces 108 are formed separately (e.g., of a hardened material, such as carbide or steel) and secured directly to the column 118, whereas in some examples an extension post 106 is arranged to support the interface 108. In some examples, the extension posts 106 and/or the interfaces 108 may be removably secured to the mounting fixture 102. For instance, different extension posts 106 and/or the interfaces 108 may have a variety of characteristics (e.g., height, contact surface area, material composition, etc.) to accommodate different sample holders 130. In some examples, the extension posts 106 and/or the interfaces 108 may have fasteners or pins mating with fasteners on the sample holder 130 to further aid in securing the sample holder 130 in the system 100.

The example mounting fixtures 102 include a base portion 103, with the column 118 extending from the base portion 103 to support the extension posts 106, interfaces 108, and the sample holder 130. In some examples, the base portion is configured to rest on a surface 122 of a platform 120. For instance, one or more fasteners 124 are arranged on the platform 120 to receive a post, dowel, bolt, etc., to secure the base portion 103 to the platform 120.

As shown in the example of FIG. 1, the mounting fixtures 102 are configured to support the sample holder 130 at a distance from the surface 122 of the platform 120 that is greater than a length of a sample holder drive adapter 134. This arrangement ensures that the sample holder 130 can be taken from a grinding/polishing system and directly placed on the mounting system 100 without requiring modification to the sample holder 130.

In some examples, one or more of the mounting fixtures 102, the platform 120, the fasteners, the mounting brackets 112, 114, the bracket lock 116, and/or extension post are formed of a metal, such as stainless steel, and/or a composite material suitable to withstand impact from a hardness testing machine.

Although the mounting fixtures 102 are illustrated having a particular geometry (e.g., substantially L-shaped), any other suitable geometry can be used. Further, the mounting fixtures 102 are illustrated as a single part including a column and a base, where in some examples the mounting fixture can be formed of two or more parts.

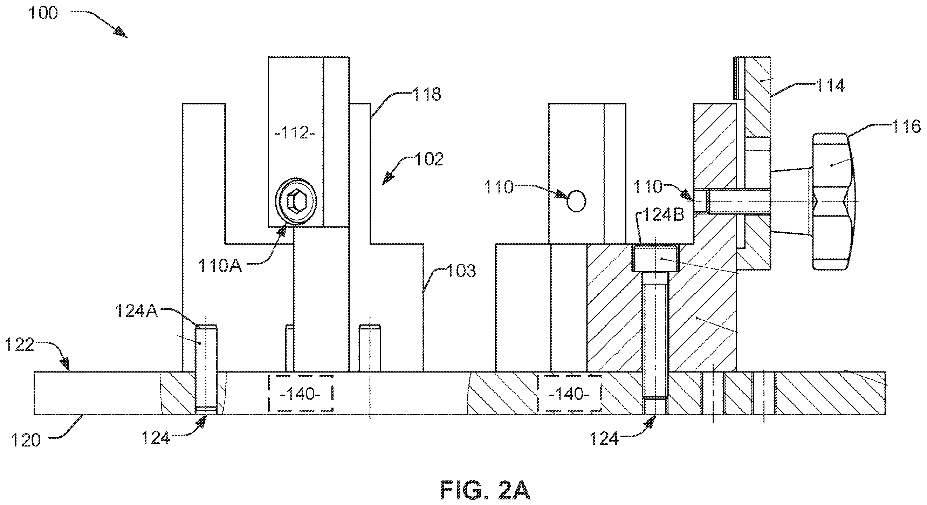

FIG. 2A illustrates a lateral view of the example system 100, with several features shown in cross-section. As shown, mounting fixtures 102 are mounted on the platform 120, and arranged on or near a fastener 124. To stabilize and/or secure the mounting fixtures 102 to the platform 120, one or more bolts 124B can secure the mounting fixture 102 to the platform 120. Additionally or alternatively, one or more posts 124A can be arranged adjacent to the base 103 to limit movement of the mounting fixtures 102.

In some examples, the platform 120 may include one or more alignment devices 140 to ensure consistent orientation of the platform 120 and system 100 in a hardness testing system, for example. In examples, the alignment devices 140 are magnets configured to mate with magnets of opposite polarity on a surface or platen of the hardness testing system. In some examples, one or more of magnets, posts, or openings can be employed to align the system 100, as a list of non-limiting examples.

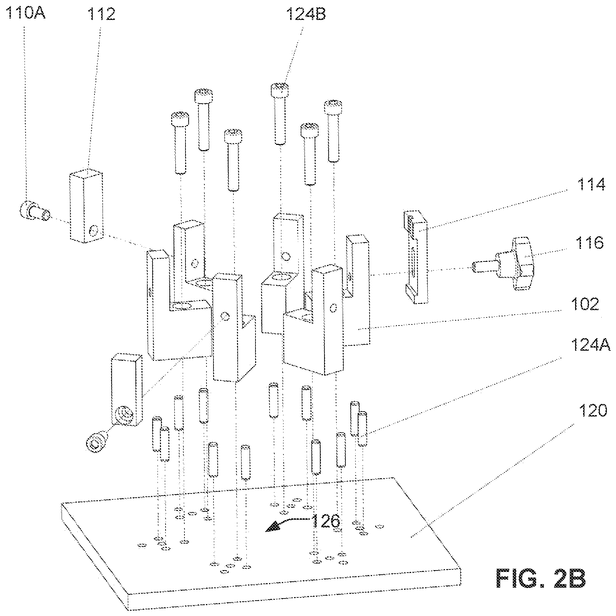

FIG. 2B illustrates an exploded view of the example system of FIG. 1. As shown, six mounting fixtures 102 are arranged about the platform center point 126 to accommodate the sample holder 130. Each mounting fixture 102 is paired with two posts 124A and a single bolt 124B to secure and/or stabilize the mounting fixtures to the platform 120. In the example of FIG. 2B, two mounting brackets 112 are secured to two mounting fixtures 102 (via bolts 110A), the two mounting fixtures being separated by an adjacent mounting fixture. A third mounting fixture 102 is separated from the two mounting fixtures by two mounting fixtures adjacent the third mounting fixture, to which an adjustable mounting bracket 114 is releasably secured by bracket lock 116.

Although illustrated with six mounting fixtures, the system may use as few as one mounting fixture, and may use more than six mounting fixtures depending on the size, shape, and/or geometry of the sample holder, and/or a particular application or testing system. Although two mounting brackets and a single adjustable mounting bracket are shown, each mounting bracket used may be adjustable, or no adjustable mounting brackets may be used. Although the mounting fixtures are illustrated about a central point on the platform, in some examples the mounting features may have an asymmetrical arrangement on the platform.

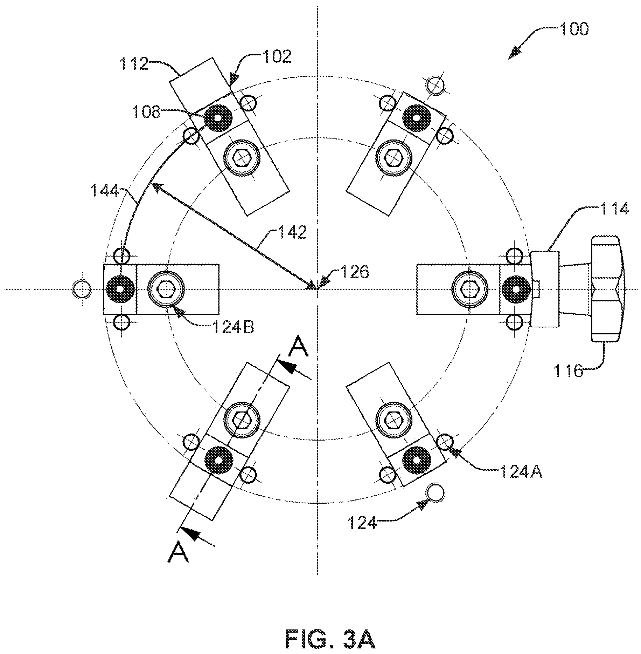

FIG. 3A illustrates a top view of the example system 100. As shown, the mounting fixtures 102 are distributed about the platform at an equal radial distance 142 from the center point 126. For example, the interfaces 108 can be at an equal distance from the center point to balance the force on the system 100 from the sample holder 130 during a testing operation (e.g., hardness testing). In some examples, the mounting fixtures are separated by an equal distance 144 between axial positions.

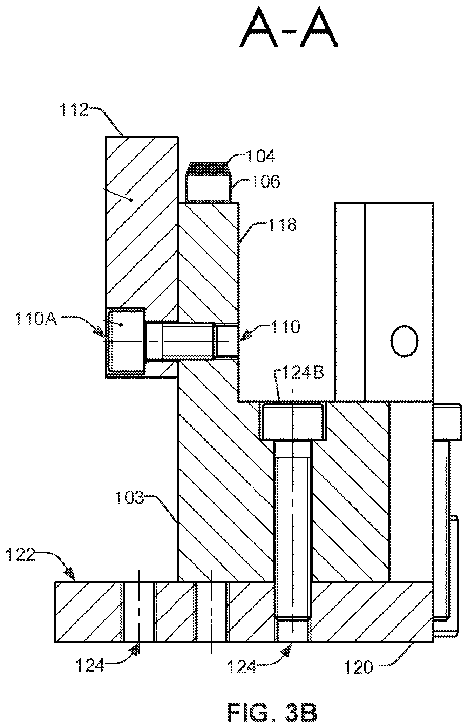

FIG. 3B illustrates a cross-sectional view along the A-A line shown in FIG. 3A, providing a detailed view of the fasteners 110, 110A to secure the mounting bracket 112 to the column 118, as well as fasteners 124 and 124B to secure the base 103 to the platform 120.

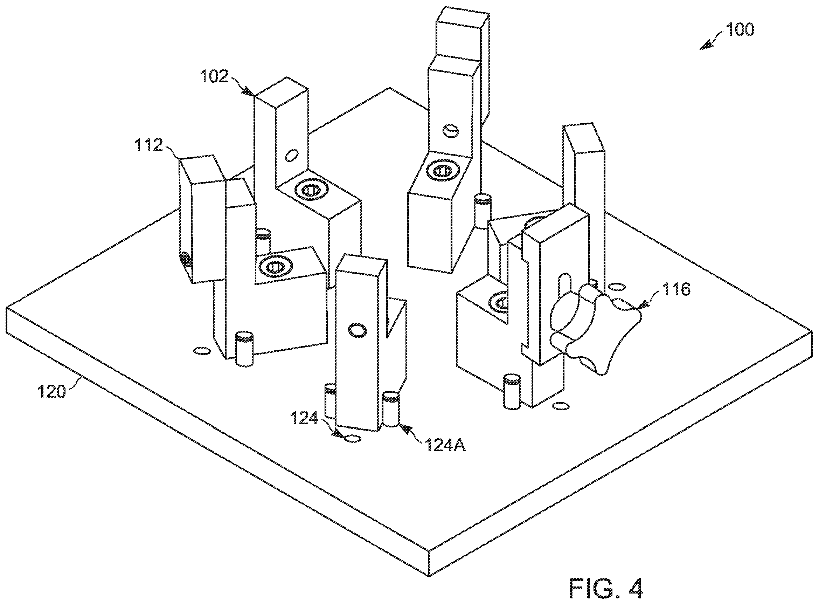

FIG. 4 is a perspective view of a block image of the example system 100 illustrated in FIG. 1, with the sample holder 130 removed.

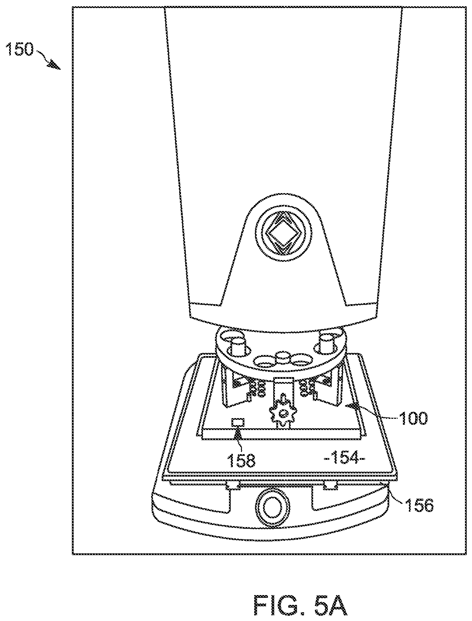

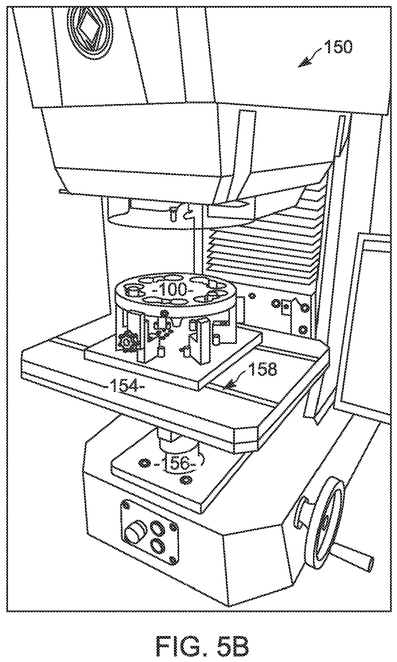

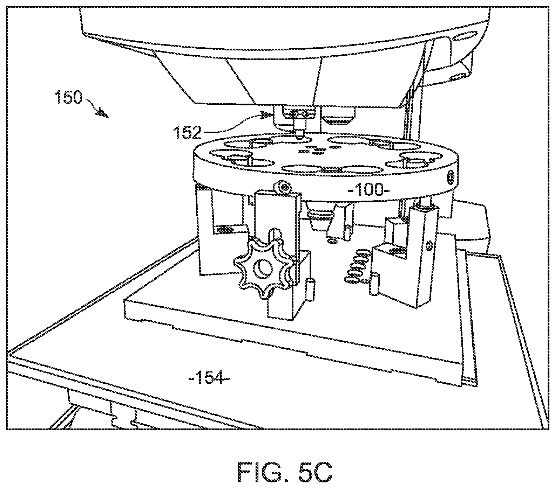

FIGS. 5A to 5C illustrate various views of the system for mounting a grinder/polisher sample holder 100 employed with a hardness testing machine 150. For example, the hardness testing machine 150 may include a platen 154 on which the system 100 may be placed. A hardness testing tool 152, such as an indenture device, is arranged above the platen 154 and configured to impact one or more of the samples 132 within the sample holder 130, causing an indent therein.

In some examples, the platen 154 includes one or more alignment devices 158 to mate with the platform 120. When aligned, the position of the samples 132 is easily determined by the hardness testing machine, such that the indenture device can impact one or more of the samples 132.

In some examples, the platen 154 is operably connected to an actuator driven movable stage 156. The actuator can be controlled by a controller (e.g., computing platform, processor, etc.) to move (e.g., shift, rotate, oscillate, etc.) the stage 156 relative to the indenture device 152 in order to move between and/or within a sample.

In some examples, the actuator is configured to move the stage 156 towards and/or away from the samples in order to adjust the load or force applied to sample (e.g., a linear-type actuator controlled to move or drive the platen towards and away from the specimen). Many types of actuators may be used to facilitate the testing operation.

In some examples, the sample holder 130 includes a number of specimen receiving slots configured to hold samples 132, which can be removed from the sample holder 130.

The foregoing description and accompanying figures illustrate the principles, preferred embodiments, and modes of operation. However, the disclosure should not be construed as being limited to the particular embodiments discussed above. Additional variations of the embodiments discussed above will be appreciated by those skilled in the art.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents. While the controllers and methods are described as being employed in connection with a grinding/polishing and/or hardness/density testing systems, the teachings may be similarly applied to other systems and operations.

## Claims

1. A system (100) for mounting a grinder/polisher sample holder, comprising:
a platform (120) comprising one or more fasteners (124);
wherein the system further comprises:
three or more mounting fixtures (102) arranged on and mounted to the platform and distributed about the platform at an equal radial distance (142) from a center point and separated by an equal distance (144) between axial positions, the three or more mounting fixtures configured to secure a sample holder, each mounting fixture comprising:
one or more mounting brackets (112, 114) to fix an orientation or position of the sample holder and configured to contact a lateral surface of the sample holder to limit movement of the sample holder in a lateral direction; and **characterized in that** each mounting fixture comprises
one or more interfaces (108) to contact and support the sample holder when the sample holder is arranged within the system, so as to limit movement of the sample holder in a downward direction.

2. The system of claim 1, wherein the arrangement of the three or more mounting fixtures on the platform is adjustable based on a size or shape of the sample holder.

3. The system of claim 1, wherein a mounting bracket of the one or more mounting brackets is configured as an adjustable mounting bracket (114), the system further comprising a bracket lock (116) to adjust a position or orientation adjustable mounting bracket to release and secure the sample holder to system.

4. The system of claim 1, wherein each mounting fixture further comprises:
a base portion (103) to mate with the platform; and
a column (118) extending from the base portion to support the one or more interface.

5. The system of claim 4, wherein the one or more interfaces are mounted to an extension post (106) extending from the column

6. The system of claim 4, wherein the base portion is configured to be secured to the platform via the one or more fasteners.

7. The system of claim 1, wherein the one or more mounting brackets are secured to the three or more mounting fixtures via one or more bracket fasteners (110).

8. The system of claim 1, wherein the three or more mounting fixtures are formed of a metal such as stainless steel, and, wherein the one or more interfaces are formed of a hardened material, such as carbide or steel.

9. The system of claim 1, wherein the three or more mounting fixtures are configured to support the sample holder at a distance from a surface of the platform that is greater than a length of a sample holder drive adapter (134).

10. The system of claim 1, wherein the system is configured to be incorporated in a hardness testing machine.

11. A hardness testing system (150), comprising:
a grinder/polisher sample holder; and
a system for mounting a grinder/polisher sample holder according to any one of the preceding claims.

12. The hardness testing system of claim 11, further comprising a platen (154) configured for mounting the system for mounting a grinder/polisher sample holder.

13. The hardness testing system of claim 12, wherein the system for mounting a grinder/polisher sample holder further comprises one or more alignment devices configured to mate with one or more alignment devices (158) at the platen.

14. The hardness testing system of claim 11, further comprising an indenture device (152) to test hardness of a sample within the sample holder by impacting the sample.

15. The hardness testing system of claim 14, further comprising a movable stage (156) upon which the platen is secured, the movable stage configured to adjust a position or orientation of the sample relative to the indenture device, and, wherein the platen further comprises one or more alignment devices (158) to mate with the platform.

## Patentansprüche

1. System (100) zum Montieren eines Schleif-/ Polierprobenhalters, aufweisend:
eine Plattform (120), die ein oder mehrere Befestigungselemente (124) aufweist;
wobei das System Folgendes aufweist:
drei oder mehr Befestigungsvorrichtungen (102), die an der Plattform angeordnet und an dieser montiert sowie um die Plattform in einem gleichen radialen Abstand (142) von einem Mittelpunkt verteilt und durch einen gleichen Abstand (144) zwischen axialen Positionen voneinander getrennt sind, wobei die drei oder mehr Befestigungsvorrichtungen dazu ausgelegt sind, um einen Probenhalter zu befestigen, wobei jede Befestigungsvorrichtung aufweist:
eine oder mehr Befestigungshalterungen (112, 114), zum Fixieren einer Orientierung oder Position des Probenhalters und dazu ausgelegt, eine laterale Oberfläche des Probenhalters zu kontaktieren, um eine Bewegung des Probenhalters in einer lateralen Richtung zu begrenzen; und **dadurch gekennzeichnet, dass** jede Befestigungsvorrichtung aufweist:
eine oder mehrere Kontaktflächen (108), um den Probenhalter zu kontaktieren und zu tragen, wenn der Probenhalter innerhalb des Systems angeordnet ist, um die Bewegung des Probenhalters in einer Abwärtsrichtung zu begrenzen.

2. System nach Anspruch 1, wobei die Anordnung der drei oder mehr Befestigungsvorrichtungen auf der Plattform basierend auf der Größe oder Form des Probenhalters einstellbar ist.

3. System nach Anspruch 1, wobei eine Befestigungshalterung der einen oder mehreren Befestigungshalterungen als verstellbare Befestigungshalterung (114) ausgelegt ist, und das System ferner eine Halterungsverriegelung (116) aufweist, um eine Position oder Ausrichtung der verstellbaren Befestigungshalterung einzustellen, um den Probenhalter gegenüber dem System freizugeben und zu befestigen.

4. System nach Anspruch 1, wobei jede Befestigungsvorrichtung ferner Folgendes aufweist:
einen Basisabschnitt (103) zum Zusammenwirken mit der Plattform; und
eine Säule (118), die sich von dem Basisabschnitt erstreckt, um die eine oder mehrere Schnittstellen zu tragen.

5. System nach Anspruch 4, wobei die eine oder mehrere Kontaktflächen an einem Verlängerungspfosten (106) montiert sind, der sich von der Säule erstreckt.

6. System nach Anspruch 4, wobei der Basisabschnitt dazu ausgelegt ist, an der Plattform über das eine oder die mehreren Befestigungselemente befestigt zu werden.

7. System nach Anspruch 1, wobei die eine oder mehreren Befestigungshalterungen an den drei oder mehr Befestigungsvorrichtungen über ein oder mehrere Halterungsbefestigungselemente (110) befestigt sind.

8. System nach Anspruch 1, wobei die drei oder mehr Befestigungsvorrichtungen aus einem Metall, wie rostfreiem Stahl, und die eine oder mehrere Schnittstellen aus einem gehärteten Material, wie Carbid oder Stahl, ausgebildet sind.

9. System nach Anspruch 1, wobei die drei oder mehr Befestigungsvorrichtungen dazu ausgelegt sind, dass sie den Probenhalter in einem Abstand von einer Oberfläche der Plattform tragen, der größer als eine Länge eines Probenhalter-Antriebsadapters (134) ist.

10. System nach Anspruch 1, wobei das System dazu ausgelegt ist, dass es in eine Härteprüfmaschine eingebaut werden kann.

11. Härteprüfsystem (150), aufweisend:
einen Schleif-/Polierprobenhalter; und
ein System zum Montieren eines Schleif-/Polierprobenhalters nach einem der vorhergehenden Ansprüche.

12. Härteprüfsystem nach Anspruch 11, das ferner eine Platte (154) aufweist, die zum Montieren des Systems zum Montieren eines Schleif-/Polierprobenhalters ausgelegt ist.

13. Härteprüfsystem nach Anspruch 12, wobei das System zum Montieren eines Schleif-/Polierprobenhalters ferner eine oder mehrere Ausrichtungsvorrichtungen aufweist, die dazu ausgelegt sind, mit einer oder mehreren Ausrichtungsvorrichtungen (158) an der Platte zusammenzuwirken.

14. Härteprüfsystem nach Anspruch 11, das ferner eine Eindrückvorrichtung (152) zum Prüfen der Härte einer Probe innerhalb des Probenhalters durch Einwirken auf die Probe aufweist.

15. Härteprüfsystem nach Anspruch 14, das ferner eine bewegliche Plattform (156) aufweist, auf der die Platte befestigt ist, wobei die bewegliche Plattform so ausgelegt ist, dass sie eine Position oder Ausrichtung der Probe relativ zu der Eindrückvorrichtung einstellt, und die Platte ferner eine oder mehrere Ausrichtungsvorrichtungen (158) aufweist, um mit der Plattform zusammenzuwirken.

## Revendications

1. Système (100) pour monter un porte-échantillon de meuleuse/polisseuse, comprenant :
une plateforme (120) comprenant une ou plusieurs attaches (124) ;
dans lequel le système comprend :
trois dispositifs de montage ou plus (102) agencés sur et fixés à la plateforme et répartis autour de la plateforme à une distance radiale égale (142) à partir d'un point central et séparés par une distance égale (144) entre des positions axiales, les trois dispositifs de montage ou plus étant configurés pour fixer un porte-échantillon, chaque dispositif de montage comprenant :
un ou plusieurs supports de montage (112, 114) pour fixer une orientation ou une position du porte-échantillon et configurés pour venir en contact avec une surface latérale du porte-échantillon pour limiter le mouvement du porte-échantillon dans une direction latérale ; et **caractérisé en ce que** chaque dispositif de montage comprend :
une ou plusieurs interfaces (108) pour entrer en contact et supporter le porte-échantillon lorsque le porte-échantillon est agencé dans le système, de manière à limiter le mouvement du porte-échantillon dans une direction vers le bas.

2. Système selon la revendication 1, dans lequel l'agencement des trois dispositifs de montage ou plus sur la plateforme est réglable en fonction de la taille ou de la forme du porte-échantillon.

3. Système selon la revendication 1, dans lequel un support de montage du ou des supports de montage est configuré comme un support de montage réglable (114), le système comprenant en outre un dispositif de verrouillage de support (116) pour régler une position ou une orientation du support de montage réglable afin de libérer et de fixer le porte-échantillon au système.

4. Système selon la revendication 1, dans lequel chaque dispositif de montage comprend en outre :
une partie de base (103) destinée à s'accoupler avec la plateforme ; et
une colonne (118) s'étendant depuis la partie de base pour supporter la ou les interfaces.

5. Système selon la revendication 4, dans lequel la ou les interfaces sont montées sur un poteau d'extension (106) s'étendant à partir de la colonne.

6. Système selon la revendication 4, dans lequel la partie de base est configurée pour être fixée à la plateforme par l'intermédiaire de la ou des attaches.

7. Système selon la revendication 1, dans lequel le ou les supports de montage sont fixés aux trois dispositifs de montage ou plus par l'intermédiaire d'un ou de plusieurs éléments de fixation de support (110).

8. Système selon la revendication 1, dans lequel les trois dispositifs de montage ou plus sont formés d'un métal tel que l'acier inoxydable, et dans lequel la ou les interfaces sont formées d'un matériau durci, tel que le carbure ou l'acier.

9. Système selon la revendication 1, dans lequel les trois dispositifs de montage ou plus sont configurés pour supporter le porte-échantillon à une distance d'une surface de la plateforme qui est supérieure à une longueur d'un adaptateur d'entraînement de porte-échantillon (134).

10. Système selon la revendication 1, dans lequel le système est configuré pour être incorporé dans une machine de test de dureté.

11. Système d'essai de dureté (150), comprenant :
un porte-échantillon de meuleuse/polisseuse ; et
un système de montage d'un porte-échantillon de meuleuse/polisseuse selon l'une quelconque des revendications précédentes.

12. Système de test de dureté selon la revendication 11, comprenant en outre une platine (154) configurée pour monter le système de montage d'un porte-échantillon de meuleuse/polisseuse.

13. Système de test de dureté selon la revendication 12, dans lequel le système de montage d'un porte-échantillon de meuleuse/polisseuse comprend en outre un ou plusieurs dispositifs d'alignement configurés pour s'accoupler avec un ou plusieurs dispositifs d'alignement (158) au niveau de la platine.

14. Système de test de dureté selon la revendication 11, comprenant en outre un dispositif d'indentation (152) pour tester la dureté d'un échantillon à l'intérieur du porte-échantillon en frappant l'échantillon.

15. Système de test de dureté selon la revendication 14, comprenant en outre une table mobile (156) sur laquelle la platine est fixée, la table mobile étant configurée pour ajuster la position ou l'orientation de l'échantillon par rapport au dispositif d'indentation, et dans lequel la platine comprend en outre un ou plusieurs dispositifs d'alignement (158) pour s'accoupler avec la plateforme.
